# EUROPEAN PATENT APPLICATION

(11) **EP 4 270 703 A1**
(43) Date of publication of application: **01.11.2023**
(21) Application number: 20967236.9
(22) Date of filing: 28.12.2020
(51) Int. Cl.: H02H 7/18

(54) **LONG-STANDBY ELECTROCHEMICAL APPARATUS, ENERGY STORAGE SYSTEM, AND ELECTRIC VEHICLE**

(71) Applicant: DONGGUAN POWERAMP TECHNOLOGY LIMITED, Dongguan, Guangdong 523000 (CN)
(72) Inventor: LIU, Qifan, Dongguan, Guangdong 523000 (CN); GE, Yulong, Dongguan, Guangdong 523000 (CN); YANG, Chao, Dongguan, Guangdong 523000 (CN)
(74) Representative: Icosa
(86) International application number: PCT/CN2020/139853
(87) International publication number: WO 2022/140883

(57) **Abstract**

This application provides an electrochemical apparatus. The electrochemical apparatus includes a battery management system, a battery unit, and a switch unit. The switch unit is electrically connected between the battery management system and the battery unit. The battery management system is configured to obtain a state of charge of the battery unit; and under a condition that the state of charge is less than a preset threshold and the electrochemical apparatus has not obtained a charging current transmitted by an external charging device, the battery management system outputs a first signal to the switch unit, and the switch unit switches off an electrical connection between the battery unit and the battery management system according to the first signal. This application further provides an energy storage system. According to the long-standby electrochemical apparatus, the energy storage system and the electric vehicle provided in this application, the electrochemical apparatus can maintain a long storage time in a case of low state of charge and unavailable timely external charging.

## Description

### TECHNICAL FIELD

This application relates to the technical field of batteries, and in particular, to a long-standby electrochemical apparatus, an energy storage system, and an electric vehicle.

### BACKGROUND

To meet the requirements for electrical energy in various fields, a battery system may be provided. Under a condition that there is sufficient electrical energy, the battery system is to be charged. Under a condition that there is insufficient electrical energy, the battery system is used for supplying power. To make an existing battery system maintain a long storage time in a case of low state of charge (SOC) and unavailable timely external charging, in terms of control policy, when the battery system reaches a low SOC, a battery management system (BMS) enters a sleep mode to reduce power consumption of the battery system. After a power supply is connected, a power control system (PCS) performs signal activation on the battery system and then the battery system is charged. However, in a case of low SOC and unavailable timely external charging, even if the battery management system (BMS) enters the sleep mode, the battery system still cannot maintain a long storage time.

### SUMMARY

In view of this, it is necessary to provide a long-standby electrochemical apparatus, an energy storage system, and an electric vehicle, to control charging of a battery management system so as to maintain a long storage time.

An embodiment of this application provides a long-standby electrochemical apparatus including a battery unit, a battery management system and a switch unit, where
the switch unit is electrically connected between the battery management system and the battery unit; and
the battery management system is configured to obtain a state of charge of the battery unit; and under a condition that the state of charge is less than a preset threshold and the electrochemical apparatus has not obtained a charging current transmitted by an external charging device, the battery management system outputs a first signal to the switch unit, and the switch unit switches off an electrical connection between the battery unit and the battery management system according to the first signal.

In one possible implementation, under the condition that the state of charge is less than the preset threshold and the electrochemical apparatus has obtained the charging current transmitted by the external charging device, the battery management system outputs a second signal to the switch unit, and the switch unit switches on an electrical connection between the battery unit and the battery management system according to the second signal.

In one possible implementation, a first power management unit and a first control unit are further included.

The first power management unit is electrically connected between the first control unit and the external charging device and is configured to convert a first voltage outputted by the external charging device into a second voltage so as to supply power to the first control unit. The first control unit controls the switch unit to switch on the electrical connection between the battery unit and the battery management system according to the second signal.

In one possible implementation, a first diode is further included.

An anode of the first diode is electrically connected to the external charging device, and a cathode of the first diode is electrically connected to the battery management system.

Under the condition that the state of charge is less than the preset threshold and the electrochemical apparatus has obtained the charging current transmitted by the external charging device, electrical energy provided by the external charging device is inputted to the battery management system through the first diode.

In one possible implementation, a second power management unit and a second control unit are further included.

A first terminal of the second power management unit is electrically connected to the battery unit, a second terminal of the second power management unit is electrically connected to the switch unit and the first diode, and a third terminal of the second power management unit is electrically connected to the second control unit.

Under the condition that the state of charge is less than the preset threshold and the electrochemical apparatus has not obtained the charging current transmitted by the external charging device, the second control unit controls the first control unit to control output of the first signal.

In one possible implementation, a third power management unit is further included.

The third power management unit is electrically connected between the first power management unit and the external charging device, and is configured to convert a third voltage outputted by the external charging device into a first voltage and transmit the first voltage after conversion to the first power management unit.

In one possible implementation, a second diode and a third diode are further included.

An anode of the second diode is electrically connected to the third power management unit, a cathode of the second diode is electrically connected to the first power management unit and a cathode of the third diode, and an anode of the third diode is electrically connected to the second power management unit.

Under a condition that the electrochemical apparatus has obtained the charging current transmitted by the external charging device, the external charging device supplies power to the control unit through the second diode and the third diode.

In one possible implementation, the switch unit includes a switch tube. A first terminal, a second terminal and a third terminal of the switch tube are electrically connected to the battery unit, the second power unit and the first control unit, respectively.

This application further provides an energy storage system. The energy storage system includes the electrochemical apparatus described above and a power control system electrically connected to the electrochemical apparatus. The power control system is configured to convert electrical energy of an external charging device and then transmit the electrical energy to the electrochemical apparatus, or convert electrical energy of the electrochemical apparatus and then transmit the electrical energy to a load.

This application further provides an electric vehicle including the electrochemical apparatus described above.

According to the long-standby electrochemical apparatus, the energy storage system and the electric vehicle provided in the embodiments of this application, a switch unit is provided to stop the battery unit from charging the battery management system under the condition that the state of charge of the battery unit is lower than the preset threshold. In this way, the long-standby electrochemical apparatus, the energy storage system and the electric vehicle provided in the embodiments of this application can allow the electrochemical apparatus to maintain a long storage time in a case of low state of charge and unavailable timely external charging.

### BRIEF DESCRIPTION OF DRAWINGS

FIG. 1 is a block diagram of an electrochemical apparatus according to a preferred embodiment of this application.
FIG. 2 is a block diagram of an electrochemical apparatus according to another embodiment of this application.
FIG. 3 is a block diagram of an electrochemical apparatus according to still another embodiment of this application.
FIG. 4 is a circuit diagram of an electrochemical apparatus according to yet another embodiment of this application.

### Reference signs of main components

| | |
|---|---|
| energy storage system | 1 |
| electrochemical apparatus | 100 |
| battery unit | 10 |
| battery management system | 20 |
| switch unit | 30 |
| power control system | 40 |
| external charging device | 50 |
| first control unit | 60 |
| first power management unit | 70 |
| second power management unit | 80 |
| third power management unit | 90 |
| second converter | 41 |
| first converter | 42 |
| third converter | 43 |
| first diode | D1 |
| second diode | D2 |
| third diode | D3 |
| fourth diode | D4 |
| battery management unit | 21 |
| monitoring management unit | 22 |
| battery pack | B1-BN |
| switch | K |
| fuse protector | F |
| first transformer | T1 |
| second transformer | T2 |
| third transformer | T3 |
| capacitor | C |
| battery management subunit | 211 |
| first electrical connection unit | NCA1-NCAN |
| analog front end | AFE1-AFEN |
| bus isolation unit | ISO1-ISON |
| photo-coupled isolation unit | PC1-PCN |
| control chip | UC1-UCN |
| second electrical connection unit | NCB1-NCBN |
| first main control chip | U1 |
| current detection circuit | 61 |
| third electrical connection unit | 221 |
| fourth converter | 222 |
| second control unit | 223 |
| control chip | U2 |
| switch tube | Q1-Q2 |
| third main control chip | U3 |

This application will be further described with reference to the accompanying drawings in the following specific embodiments.

### DETAILED DESCRIPTION OF EMBODIMENTS

The technical solutions in the embodiments of this application will be clearly and completely described with reference to the accompanying drawings in the embodiments of this application. Apparently, the described embodiments are some rather than all of the embodiments of this application.

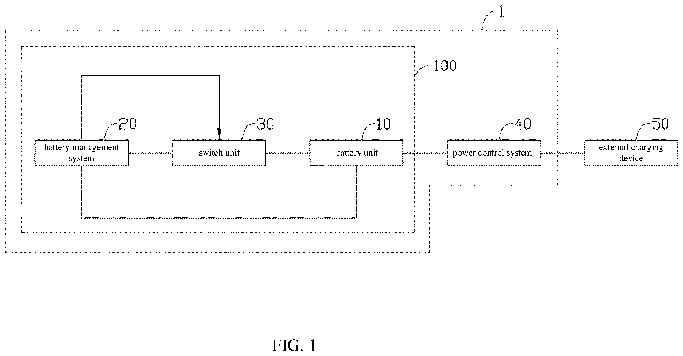

Refer to FIG. 1. FIG. 1 is a block diagram of an energy storage system 1 according to a preferred embodiment of this application. The energy storage system 1 includes a long-standby electrochemical apparatus 100 and a power control system 40. The electrochemical apparatus 100 may be electrically connected to a power control system 40, and the electrochemical apparatus 100 includes a battery unit 10, a battery management system 20 and a switch unit 30.

In this embodiment of this application, the battery unit 10 is configured to convert its chemical energy into electrical energy, and the battery unit 10 may include a plurality of battery cells and has a positive electrode and a negative electrode. The battery unit 10 can execute a discharge operation. Under a condition that an external circuit connected to the battery unit 10 is disconnected, a potential difference (an open-circuit voltage) is present between the two electrodes of the battery unit 10, but no current flows therebetween, and the chemical energy stored in the battery unit 10 cannot be converted into electrical energy. Under a condition that the external circuit connected to the battery unit 10 is connected, a current flows through the external circuit under the action of a potential difference between the two electrodes of the battery unit 10, such that the battery unit 10 is discharged.

In this embodiment of this application, the battery unit 10 is electrically connected to the battery management system 20 through the switch unit 30. While the battery unit 10 is executing a discharge operation, the battery unit 10 outputs electrical energy to the battery management system 20 to maintain operation of the battery management system 20. The battery unit 10 is electrically connected to the power control system 40, the power control system 40 is electrically connected to a load (not shown in the figure), and the battery unit 10 transmits the electrical energy to the load (not shown in the figure) through the power control system 40.

In this embodiment of this application, during charging of the battery unit 10, a direction of a charge and mass transfer process in a battery is opposite to a discharging direction. Specifically, the power control system 40 is electrically connected to an external charging device 50. The power control system 40 transmits the electrical energy of the external charging device 50 to the battery unit 10, such that the external charging device 50 charges the battery unit 10.

In this embodiment of this application, the battery management system 20 is electrically connected to the battery unit 10 and may be configured to measure a terminal voltage of the battery unit 10. With battery cells charged equally, all batteries in the battery unit 10 are in a uniform and consistent state. A total voltage of the battery unit 10 is measured, a total current and a state of charge of the battery unit 10 are measured, and an operating state of the battery unit 10 is dynamically monitored. During charging and discharging of the battery, a terminal voltage, temperature and charging/discharging current of each battery in the battery unit 10 as well as a total voltage of the battery unit 10 are acquired in real time to prevent overcharge or overdischarge of the battery. Real-time data are displayed, data are recorded and analyzed, and the like. The battery management system 20 outputs a signal according to the measured state of charge of the battery unit 10.

Specifically, under a condition that the state of charge is less than a preset threshold, the battery management system 20 outputs a first signal to the switch unit 30, and the switch unit 30 switches off an electrical connection between the battery unit 10 and the battery management system 20 according to the first signal. Under a condition that the state of charge is greater than or equal to the preset threshold, the battery management system 20 outputs a second signal to the switch unit 30, and the switch unit 30 switches on the electrical connection between the battery unit 10 and the battery management system 20 according to the second signal.

It can be understood that the state of charge refers to a ratio of remaining power to a rated capacity of the battery under a specified discharge rate under the same condition. The preset threshold refers to a threshold preset by a user, which may be 20% and is not specifically limited in this application.

In this embodiment of this application, the switch unit 30 is electrically connected between the battery management system 20 and the battery unit 10. The switch unit 30 receives a signal of the battery management system 20, so as to switch off or switch on the electrical connection between the battery management system 20 and the battery unit 10 according to the signal. After the electrical connection between the battery management system 20 and the battery unit 10 is switched off, power supply from the battery unit 10 to the battery management system 20 is stopped. After the electrical connection between the battery management system 20 and the battery unit 10 is switched on, the battery unit 10 supplies power to the battery management system 20. In this way, under the condition that the state of charge of the battery unit 10 is less than the preset threshold, power consumption of the battery unit 10 caused by the battery management system 20 is avoided.

Specifically, under a condition that the battery unit 10 has low state of charge and the battery unit 10 cannot be charged externally in time, even if the battery management system 20 enters a sleep mode, the battery management system 20 still needs to consume power under the sleep mode. As a result, a storage time of the electrochemical apparatus 100 still cannot meet requirements. Therefore, this application provides an electrochemical apparatus 100. A switch unit 30 is provided. The switch unit 30 switches on or switches off an electrical connection between the battery unit 10 and the battery management system 20 according to a signal outputted by the battery management system 20. Under a condition that the state of charge of the battery unit 10 is less than a preset threshold and a charging current transmitted by an external charging device 50 has not been obtained, the battery management system 20 outputs a first signal to the switch unit 30, and the switch unit 30 switches off the electrical connection between the battery unit 10 and the battery management system 20 according to the first signal. That is, the battery unit 10 no longer supplies power to the battery management system 20, thereby reducing consumption of electrical energy of the electrochemical apparatus 100 so as to maintain a longer storage time. Under a condition that the state of charge is less than the preset threshold and the electrochemical apparatus 100 has obtained the charging current transmitted by the external charging device 50, the battery management system 20 outputs a second signal to the switch unit 30, and the switch unit 30 switches on the electrical connection between the battery unit 10 and the battery management system 20 according to the second signal, such that the battery unit 10 supplies power to the battery management system 20 after the external charging device 50 transmits the electrical energy to the battery unit 10.

It can be understood that the first signal is used for switching off the electrical connection between the battery unit 10 and the battery management system 20, and the second signal is used for switching on the electrical connection between the battery unit 10 and the battery management system 20.

It can be understood that when the external charging device 50 charges the electrochemical apparatus 100, the electrochemical apparatus 100 receives the charging current transmitted by the external charging device 50.

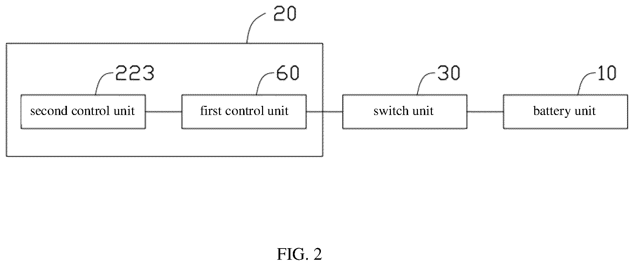

Refer to FIG. 2. FIG. 2 is a block diagram of an electrochemical apparatus 100 according to a preferred embodiment of this application.

In this embodiment of this application, the battery management system 20 includes a first control unit 60 and a second control unit 223. The first control unit 60 is electrically connected to the switch unit 30, and the first control unit 60 is configured to control the switch unit 30 to switch on or switch off the electrical connection between the battery unit and the battery management system according to the signal outputted by the battery management system 20.

Specifically, under a condition that the state of charge is less than the preset threshold and the electrochemical apparatus 100 has not obtained the charging current transmitted by the external charging device 50, the second control unit 223 outputs a switch-off signal to the first control unit 60, the first control unit 60 outputs a first signal according to the signal outputted by the second control unit 223, and the first control unit 60 controls the switch unit 30 to switch off the electrical connection between the battery unit 10 and the battery management system 20 according to the first signal. Under a condition that the state of charge is less than the preset threshold and the electrochemical apparatus 100 has obtained the charging current transmitted by the external charging device 50, the first control unit 60 outputs a second signal, and the first control unit 60 controls the switch unit 30 to switch on the electrical connection between the battery unit 10 and the battery management system 20 according to the second signal. Under a condition that the state of charge is greater than or equal to the preset threshold, the battery management system 20 outputs a second signal to the first control unit 60, and the first control unit 60 controls the switch unit 30 to switch on the electrical connection between the battery unit 10 and the battery management system 20 according to the second signal.

For example, under the condition that the state of charge is less than the preset threshold and the electrochemical apparatus 100 has not obtained a power supply signal of the external charging device 50, that is, under a condition that the current state of charge is less than the preset threshold and power supply of the external charging device 50 has not been obtained, the second control unit 223 outputs a switch-off signal to the first control unit 60 or the switch unit 30. Under a condition that the switch-off signal is outputted to the first control unit 60, the first control unit 60 outputs a first signal to the switch unit 30 according to the switch-off signal, and the first control unit 60 controls the switch unit 30 to switch off the electrical connection between the battery unit 10 and the battery management system 20 according to the first signal. Under a condition that the switch-off signal is outputted to the switch unit 30, the switch-off signal is the first signal, and the switch unit 30 switches off the electrical connection between the battery unit 10 and the battery management system 20 according to the first signal. In this way, under the condition that the state of charge is less than the preset threshold and the battery unit 10 has not been charged by the external charging device 50, the electrical connection between the battery unit 10 and the battery management system 20 is switched off, and the battery unit 10 stops charging the battery management system 20, thereby maintaining long-time storage of the electrochemical apparatus 100.

Under the condition that the state of charge is less than the preset threshold and the electrochemical apparatus 100 has obtained a power supply signal of the external charging device 50, that is, under a condition that the current state of charge is less than the preset threshold and power supply of the external charging device 50 has been obtained, the second control unit 223 outputs a switch-on signal to the first control unit 60 or the switch unit 30. Under a condition that the switch-on signal is outputted to the first control unit 60, the first control unit 60 outputs a second signal to the switch unit 30 according to the switch-on signal, and the first control unit 60 controls the switch unit 30 to switch on the electrical connection between the battery unit 10 and the battery management system 20 according to the second signal. Under a condition that the switch-on signal is outputted to the switch unit 30, the switch-on signal is the second signal, and the switch unit 30 switches on the electrical connection between the battery unit 10 and the battery management system 20 according to the second signal. In this way, under the condition that the state of charge is less than the preset threshold and the battery unit 10 has received a signal indicating that the external charging device 50 is to supply power to the battery unit 10, the battery unit 10 can receive electrical energy provided by the external charging device 50, and the electrical connection between the battery unit 10 and the battery management system 20 is switched on. Thus, even if the battery unit 10 charges the battery management system 20, deficiency of electrical energy of the battery unit 10 can still be avoided.

Under the condition that the state of charge is greater than or equal to the preset threshold, the second control unit 223 outputs a switch-on signal to the first control unit 60 or the switch unit 30. Under a condition that the switch-on signal is outputted to the first control unit 60, the first control unit 60 outputs a second signal to the switch unit 30 according to the switch-on signal, and the first control unit 60 controls the switch unit 30 to switch on the electrical connection between the battery unit 10 and the battery management system 20 according to the second signal. Under a condition that the switch-on signal is outputted to the switch unit 30, the switch-on signal is the second signal, and the switch unit 30 switches on the electrical connection between the battery unit 10 and the battery management system 20 according to the second signal. In this way, under the condition that the state of charge is greater than or equal to the preset threshold, the electrical connection between the battery unit 10 and the battery management system 20 is switched on, and the battery unit 10 charges the battery management system 20.

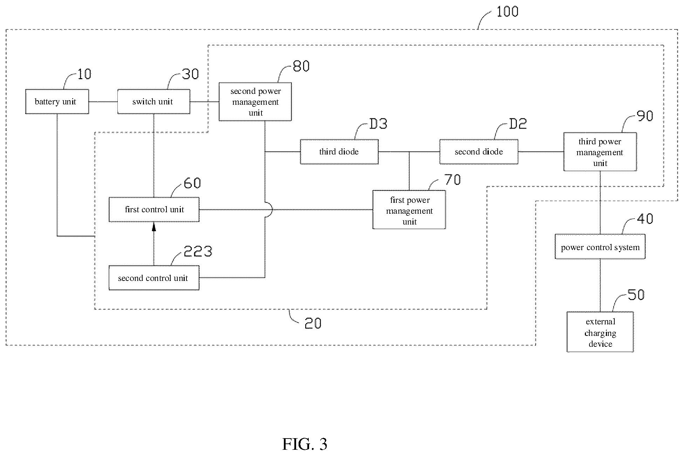

Refer to FIG. 3. FIG. 3 is a block diagram of an electrochemical apparatus 100 according to a preferred embodiment of this application.

In this embodiment of this application, the electrochemical apparatus 100 further includes a first power management unit 70. The first power management unit 70 is electrically connected between the first control unit 60 and an external charging device 50, and is configured to convert a first voltage outputted by the external charging device 50 into a second voltage so as to supply power to the first control unit 60; and the first control unit 60 controls the switch unit 30 to switch on the electrical connection between the battery unit 10 and the battery management system 20 according to the second signal.

In one possible implementation, the electrochemical apparatus 100 further includes a second power management unit 80 and a second control unit 223.

A first terminal of the second power management unit 80 is electrically connected to the battery unit 10, a second terminal of the second power management unit 80 is electrically connected to the switch unit 30, and a third terminal of the second power management unit 80 is electrically connected to the second control unit 223. Under a condition that the state of charge is less than the preset threshold and the electrochemical apparatus 100 has not obtained the charging current transmitted by the external charging device 50, the second control unit 223 controls the first control unit 60 to control output of a first signal, such that the switch unit 30 switches off the electrical connection between the battery unit 10 and the battery management system 20 according to the first signal.

In one possible implementation, a third power management unit 90 is further included. The third power management unit 90 is electrically connected between the first power management unit 70 and the external charging device 50, and is configured to convert a third voltage outputted by the external charging device 50 into a first voltage and then transmit the first voltage after conversion to the first power management unit 70.

In one possible implementation, a second diode D2 and a third diode D3 are further included. An anode of the second diode D2 is electrically connected to the third power management unit 90, a cathode of the second diode D2 is electrically connected to the first power management unit 70 and a cathode of the third diode d3, and an anode of the third diode D3 is electrically connected to the second power management unit 80. Under a condition that the electrochemical apparatus has obtained the charging current transmitted by the external charging device 50, the external charging device 50 supplies power to the first control unit 60 through the second diode D2 and the third diode D3.

In this embodiment of this application, under a condition that the switch unit 30 is in a cut-off state, that is, under a condition that an electrical connection between the second power management unit 80 and the battery unit 10 is switched off, the second power management unit 80 fails to transmit the electrical energy of the battery unit 10 to the battery management system 20, that is, the second power management unit 80 switches off the electrical connection between the battery unit 10 and the battery management system 20 under the control of the switch unit 30, such that the battery unit 10 no longer provides electrical energy for the battery management system 20. The switch unit 30 controls the second power management unit 80, that is, controlling power input of the battery management system 20. Under the condition that the state of charge of the battery unit 10 is lower than the preset threshold, the battery unit 10 stops the power supply to the battery management system 20, and the battery management system 20 is powered off, so that consumption of electrical energy of the battery unit 10 is reduced.

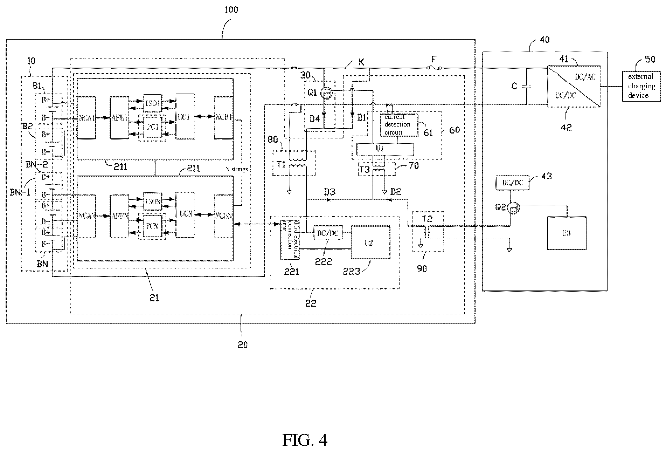

Also refer to FIG. 4. FIG. 4 is a circuit diagram of an electrochemical apparatus 100 according to a preferred embodiment of this application.

The first power management unit 70 is electrically connected between the first control unit 60 and an external charging device 50, and is configured to convert a first voltage outputted by the external charging device 50 into a second voltage so as to supply power to the first control unit 60.

In this embodiment of this application, the first power management unit 70 can receive electrical energy of the third power management unit 90 and second power management unit 80, and the third power management unit 90 and second power management unit 80 competitively supply power to the first power management unit 70.

An anode of the third diode D3 is electrically connected to the second power management unit 80, and a cathode of the third diode D3 is electrically connected to the first power management unit 70.

In this embodiment of this application, the third diode D3 is configured to implement unidirectional transmission of the electrical energy between the second power management unit 80 and the first power management unit 70, so that the electrical energy of the second power management unit 80 is unidirectionally provided to the first power management unit 70.

An anode of the second diode D2 is electrically connected to the third power management unit 90, and a cathode of the second diode D2 is electrically connected to the first power management unit 70.

In this embodiment of this application, the second diode D2 is configured to implement unidirectional transmission of the electrical energy between the third power management unit 90 and the first power management unit 70, so that the electrical energy of the third power management unit 90 is unidirectionally provided to the first power management unit 70.

In this embodiment of this application, after the external charging device 50 such as an external mains supply or photovoltaic power supply is connected, the power control system 40 transmits the electrical energy of the external charging device 50 to the third power management unit 90; the third power management unit 90 unidirectionally transmits the electrical energy of the external charging device 50 to the first power management unit 70 through the second diode D2; the first power management unit 70 supplies power to the first control unit 60; after powered on, the first control unit 60 controls the switch unit 30 to switch on the electrical connection between the battery unit 10 and the second power management unit 80; and the battery unit 10 charges the battery management system 20 through the second power management unit 80. Meanwhile, the second power management unit 80 unidirectionally transmits the electrical energy of the second power management unit 80 to the first power management unit 70 through the third diode D3; and the first power management unit 70 supplies power to the first control unit 60 to implement competitive power supply of the third power management unit 90 and the second power management unit 80 to the first control unit 60, thereby preventing a situation that the first control unit 60 is likely to be powered off when the external charging device 50 is unstable.

An anode of the first diode D1 is electrically connected to the external charging device 50, and a cathode of the first diode D1 is electrically connected to the second power management unit 80 and is configured to transmit the electrical energy of the external charging device 50 to the second power management unit 80, such that the electrical energy is transmitted to the battery management system 20 or the first control unit 60 through the second power management unit 80.

In this embodiment of this application, the power control system 40 is electrically connected to the external charging device 50. After an external mains supply or photovoltaic power supply is connected, the power control system 40 fails to supply power to the first power management unit 70, and the power control system 40 unidirectionally transmits the electrical energy of the external charging device 50 to the second power management unit 80 through the first diode D1, such that the second power management unit 80 can supply power to the first power management unit 70 and the battery management system 20. The first power management unit 70 supplies power to the first control unit 60, and the first control unit 60 is powered on to control the switch unit 30 to switch on the electrical connection between the battery unit 10 and the second power management unit 80.

In this embodiment of this application, as shown in FIG. 4, the battery unit 10 may include a switch K, a fuse protector F, and M strings of battery packs B1-BN, where M is an integer greater than or equal to 1. The switch K may be an electronic switch or a mechanical switch. The power control system 40 may include a first converter 42, a second converter 41, and a capacitor C. A positive electrode B+ of the first string of battery pack B1 is electrically connected to one terminal of the capacitor C and a first direct-current port of the first converter 42 through the switch K and the fuse protector F. A positive electrode B+ of the M-th string of battery pack BN is electrically connected to a negative electrode B- of the (M-1)-th string of battery pack BN-1. A negative electrode B- of the M-th string of battery pack BN is electrically connected to another terminal of the capacitor C and a second direct-current port of the first converter 42. A third direct-current port of the first converter 42 is electrically connected to a direct-current port of the second converter 41, and an alternating-current port of the second converter 41 can be electrically connected to the external charging device 50 or a load (not shown in the figure).

In this embodiment of this application, the first converter 42 is a DC/DC converter, and the second converter 41 is a DC/AC converter.

In one possible implementation, the battery management system 20 includes a battery management unit 21 and a monitoring management unit 22.

The battery management unit 21 is electrically connected to the battery unit 10 and is configured to obtain parameters of the battery unit 10.

In this embodiment of this application, the battery management unit 21 is configured to monitor the parameters such as voltage and temperature of the battery unit 10, and uploads the parameters to the monitoring management unit 22.

The monitoring management unit 22 is electrically connected to the battery management unit 21, obtains the parameters monitored by the battery management unit 21, calculates a state of charge according to the parameters obtained, and specifically compares the state of charge with a preset threshold according to the state of charge signal. Under a condition that the state of charge is less than the preset threshold, the monitoring management unit 22 outputs a first signal, and under a condition that the state of charge is greater than or equal to the preset threshold, the monitoring management unit 22 outputs a second signal. The monitoring management unit 22 communicates with the first control unit 60 and outputs a corresponding signal to the first control unit 60, such that the first control unit 60 outputs a first signal or a second signal. The monitoring management unit 22 is configured to manage a charging process and a discharging process of the battery unit 10.

In this embodiment of this application, the battery management unit 21 includes N strings of battery management subunits 211, where N is an integer greater than 1. The battery management subunit 211 includes N analog front ends AFE1-AFEN, N bus isolation units ISO1-ISON, N photo-coupled isolation units PC1-PCN, N first control chips UC1-UCN, N first electrical connection units NCA1-NCAN, and N second electrical connection units NCB1-NCBN, where the N first electrical connection units NCA1-NCAN may be electrical connection contact points, and the N second electrical connection units NCB1-NCBN may be electrical connection contact points. The N analog front ends AFE1-AFEN are electrically connected to the battery unit 10 through the corresponding first electrical connection units NCA1-NCAN, respectively. For example, the analog front end AFE1 is electrically connected to the battery unit 10 through the first electrical connection unit NCA1 and acquires voltage, temperature and the like of the battery unit 10. The N analog front ends AFE1-AFEN are electrically connected to the corresponding control chips UC1-UCN through the N bus isolation units ISO 1-ISON and the N photo-coupled isolation units PC1-PCN. The N control chips UC1-UCN are electrically connected to the monitoring management unit 22 through the corresponding second electrical connection units NCB1-NCBN, respectively.

In this embodiment of this application, the monitoring management unit 22 may include a third electrical connection unit 221, a third converter 43 and a second control unit 223. One terminal of the third electrical connection unit 221 is electrically connected to the N second electrical connection units NCB1-NCBN; another terminal of the third electrical connection unit 221 is electrically connected to one terminal of the third converter 43 and the second control unit 223; and another terminal of the third converter 43 is electrically connected to the second control unit 223. The third converter 43 may be a DC/DC converter, and the third electrical connection unit 221 may be a contact point. The second control unit 223 receives information acquired by the N control chips UC1-UCN and calculates the state of charge according to the information acquired, so as to output a corresponding signal to the first control unit 60 according to the state of charge, where the second control unit 223 includes a control chip U2.

In this embodiment of this application, the switch unit 30 includes a switch tube Q1 and a fourth diode D4. A first terminal of the switch tube Q1 is electrically connected to a positive electrode of the battery unit 10, a second terminal of the switch tube Q1 is electrically connected to an anode of the fourth diode D4, a cathode of the fourth diode D4 is electrically connected to the second power management unit 80, and a third terminal of the switch tube Q1 is electrically connected to the first control unit 60.

In this embodiment of this application, the first control unit 60 includes a first main control chip U1 and a current detection circuit 61. A first terminal of the first main control chip U1 is electrically connected to the first power management unit 70, a second terminal of the first main control chip U1 is electrically connected to one terminal of the current detection circuit 61, and a third terminal of the first main control chip U1 is electrically connected to the switch unit 30. The first main control chip U1 communicates with the control chip U2 and is configured to obtain a signal outputted by the control chip U2, so as to output a first signal or a second signal according to the signal outputted by the control chip U2 and control switching on or switching off of the switch tube Q1 according to the first signal or the second signal. Another terminal of the current detection circuit 61 is electrically connected between the battery unit 10 and another terminal of the capacitor C, and the current detection circuit 61 is configured to obtain an output current in a battery loop.

Under a condition that the electrochemical apparatus 100 runs in a high-voltage environment, the second power management unit 80 may be a first transformer T1, and the first transformer T1 includes a primary coil and a secondary coil. The third power management unit 90 may be a second transformer T2, and the second transformer T2 includes a primary coil and a secondary coil. The first power management unit 70 may be a third transformer T3, and the third transformer T3 includes a primary coil and a secondary coil.

Under a condition that the electrochemical apparatus 100 runs in a high-voltage environment, in a preferred embodiment of this application, the switch tube Q1 is a high-voltage-resisting and low-leakage-current electronic switch such as a transistor, where the transistor may be a bipolar transistor or a field effect transistor. Under a condition that the switch tube Q1 is a bipolar transistor, a third terminal of the switch tube Q1 corresponds to a base electrode of the bipolar transistor, a first terminal of the switch tube Q1 corresponds to a collector electrode or emitter electrode of the bipolar transistor, and a second terminal of the switch tube Q1 corresponds to the emitter electrode or collector electrode of the bipolar transistor. Under a condition that the switch tube Q1 is a field effect transistor, the third terminal of the switch tube Q1 corresponds to a grid electrode of the field effect transistor, the first terminal of the switch tube Q1 may be a drain electrode or source electrode of the field effect transistor, and the second terminal of the switch tube Q1 may be the source electrode or drain electrode of the field effect transistor. Generally, in an N-type transistor, voltage of a drain electrode should be greater than or equal to voltage of a source electrode. Therefore, positions of the source electrode and the drain electrode may change with variation of a biasing state of the transistor. In another embodiment, the switch tube Q1 may be a mechanical switch. The switch tube Q1 may be an NMOS tube.

The first terminal of the switch tube Q1 is electrically connected between the battery unit 10 and the switch K; the second terminal of the switch tube Q1 is electrically connected to an anode of the fourth diode D4; the third terminal of the switch tube Q1 is electrically connected to an output terminal of the first main control chip U1; and another terminal of the first main control chip U1 is electrically connected to the current detection circuit 61. A cathode of the fourth diode D4 is electrically connected to one terminal of the primary coil of the first transformer T1; the other terminal of the primary coil of the first transformer T1 is electrically connected to the first terminal of the switch tube Q1 through the battery unit 10; one terminal of the secondary coil of the first transformer T1 is grounded; and the other terminal of the secondary coil of the first transformer T1 is electrically connected to an anode of the third diode D3 and between the third electrical connection unit 221 and the fourth converter 222. A cathode of the third diode D3 is electrically connected to a cathode of the second diode D2 and one terminal of the primary coil of the third transformer T3; the other terminal of the primary coil of the third transformer T3 is grounded; and two terminals of the secondary coil of the third transformer T3 are electrically connected to a power input terminal of the first main control chip U1. An anode of the second diode D2 is electrically connected to one terminal of the secondary coil of the second transformer T2; the other terminal of the secondary coil of the second transformer T2 is grounded; one terminal of the primary coil of the second transformer T2 is electrically connected to the power control system 40; and the other terminal of the primary coil of the second transformer T2 is grounded.

In this embodiment of this application, the power control system 40 further includes a switch tube Q2, a third main control chip U3 and a third converter 43. The switch tube Q2 may be a high-voltage-resisting and low-leakage-current electronic switch such as a transistor, where the transistor may be a bipolar transistor or a field effect transistor. The third converter 43 may be a DC/DC converter.

One terminal of the third converter 43 is electrically connected to the first converter 42; another terminal of the third converter 43 is electrically connected to a first terminal of the switch tube Q2; a third terminal of the switch tube Q2 is electrically connected to the third main control chip U3; and a second terminal of the switch tube Q2 is electrically connected to one terminal of the primary coil of the second transformer T2.

The following describes an operating principle of an electrochemical apparatus 100 in this application by using a circuit diagram shown in FIG. 4 as an example.

When the battery management system 20 is in operation, the N analog front ends AFE1-AFEN acquire parameters such as voltage and temperature of the M battery packs B1-BN through the corresponding first electrical connection units NCA1-NCAN, and transmit the acquired parameters to the corresponding control chips UC1-UCN through respective photo-coupled isolation units PC1-PCN in the battery management subunit 211 of the battery management system 20. The N control chips UC1-UCN transmit detected parameter data such as voltage and temperature to the control chip U2; the control chip U2 obtains a state of charge through calculation according to the parameter data obtained, and compares the obtained state of charge with the preset threshold. Under a condition that the state of charge is less than the preset threshold, the control chip U2 outputs a signal to the first main control chip U1 so that the first main control chip U1 switches off the switch tube Q1; after the switch tube Q1 is switched off, an electrical connection between the anode of the battery unit 10 and one terminal of the primary coil of the first transformer T1 is switched off; the battery unit 10 fails to supply power to the first transformer T1; accordingly, the first transformer T1 fails to output electrical energy to the control chip U2, and the control chip U2 is powered off; and as a result, a charging process and a discharging process of the battery unit 10 cannot be managed, and the battery management system 20 is powered off.

After the external charging device 50 is connected, the external charging device 50 converts the electrical energy through the power control system 40; the third main control chip U3 is powered on to control the switch tube Q2 to be switched on; meanwhile, the electrical energy of the external charging device 50 is transmitted to the second transformer T2 through the first converter 42, the second converter 41, the third converter 43 and the switch tube Q2; and the second transformer T2 transmits the electrical energy to the third transformer T3 through the second diode D2, so that the third transformer T3 transmits the electrical energy to the first main control chip U1. After powered on, the first main control chip U1 controls switching on of the switch tube Q1, so as to connect an electrical connection loop between the battery unit 10 and the first transformer T1; the battery unit 10 supplies power to the control chip U2 through the first transformer T1; and meanwhile, the first transformer T1 supplies power to the third transformer T3 through the third diode D3. In this way, competitive power supply of the first transformer T1 and the third transformer T3 to the first main control chip U1 is implemented.

Under a condition that the external charging device 50 is connected but the electrical energy of the power control system 40 cannot be used to charge the third transformer T3 through the second transformer T2, the power control system 40 transmits the converted electrical energy to one terminal of the primary coil of the first transformer T1 through the first diode D1, so as to connect an electrical connection loop between the first transformer T1 and the power control system 40. The first main control chip U1 and the control chip U2 are supplied with power by the first transformer T1. In this way, the first main control chip U1 and the control chip U2 are powered on.

In the above embodiment, a switch unit 30 is provided to stop the battery unit 10 from charging the battery management system 20 under the condition that the state of charge of the battery unit 10 is less than the preset threshold. In this way, the electrochemical apparatus 100 provided by this embodiment of this application can maintain a longer storage time in a case of low state of charge and unavailable timely external charging.

The embodiments of this application further provide an electric vehicle. The electric vehicle includes the power control system 40, and the electric vehicle includes the electrochemical apparatus 100 provided by the embodiments of this application. The electric vehicle may be an electric automobile or a remote control car. It can be understood that the electric vehicle is a car or toy car using a battery, which is not specifically limited in this application.

## Claims

1. A long-standby electrochemical apparatus, comprising a battery unit, a battery management system and a switch unit, wherein
the switch unit is electrically connected between the battery management system and the battery unit; and
the battery management system is configured to obtain a state of charge of the battery unit; and under a condition that the state of charge is less than a preset threshold and the electrochemical apparatus has not obtained a charging current transmitted by an external charging device, the battery management system outputs a first signal to the switch unit, so as to control the switch unit to switch off an electrical connection between the battery unit and the battery management system according to the first signal.

2. The long-standby electrochemical apparatus according to claim 1, **characterized in that** under the condition that the state of charge is less than the preset threshold, and
the electrochemical apparatus has obtained the charging current transmitted by the external charging device, the battery management system outputs a second signal to the switch unit, and the switch unit switches on the electrical connection between the battery unit and the battery management system according to the second signal.

3. The long-standby electrochemical apparatus according to claim 2, further comprising a first power management unit and a first control unit, wherein
the first power management unit is electrically connected between the first control unit and the external charging device and is configured to convert a first voltage outputted by the external charging device into a second voltage so as to supply power to the first control unit; and the first control unit controls the switch unit to switch on the electrical connection between the battery unit and the battery management system according to the second signal.

4. The long-standby electrochemical apparatus according to any one of claims 1 to 3, further comprising a first diode, wherein
an anode of the first diode is electrically connected to the external charging device, and a cathode of the first diode is electrically connected to the battery management system; and
under the condition that the state of charge is less than the preset threshold and the electrochemical apparatus has obtained the charging current transmitted by the external charging device, electrical energy provided by the external charging device is inputted to the battery management system through the first diode.

5. The long-standby electrochemical apparatus according to claim 4, further comprising a second power management unit and a second control unit, wherein
a first terminal of the second power management unit is electrically connected to the battery unit, a second terminal of the second power management unit is electrically connected to the switch unit and the first diode, and a third terminal of the second power management unit is electrically connected to the second control unit; and
under the condition that the state of charge is less than the preset threshold and the electrochemical apparatus has not obtained the charging current transmitted by the external charging device, the second control unit controls the first control unit to control output of the first signal.

6. The long-standby electrochemical apparatus according to claim 2, further comprising a third power management unit, wherein
the third power management unit is electrically connected between the first power management unit and the external charging device, and is configured to convert a third voltage outputted by the external charging device into a first voltage and transmit the first voltage after conversion to the first power management unit.

7. The long-standby electrochemical apparatus according to claim 6, further comprising a second diode and a third diode, wherein
an anode of the second diode is electrically connected to the third power management unit, a cathode of the second diode is electrically connected to the first power management unit and a cathode of the third diode, and an anode of the third diode is electrically connected to the second power management unit; and
under a condition that the electrochemical apparatus has obtained the charging current transmitted by the external charging device, the external charging device supplies power to the first control unit through the second diode and the third diode.

8. The long-standby electrochemical apparatus according to claim 5, **characterized in that** the switch unit comprises a switch tube, and a first terminal, a second terminal and a third terminal of the switch tube are electrically connected to the battery unit, the second power unit and the first control unit, respectively.

9. An energy storage system, comprising the electrochemical apparatus according to any one of claims 1 to 8 and a power control system electrically connected to the electrochemical apparatus, wherein the power control system is configured to convert electrical energy of an external charging device and then transmit the electrical energy to the electrochemical apparatus, or convert electrical energy of the electrochemical apparatus and then transmit the electrical energy to a load.

10. An electric vehicle, comprising the electrochemical apparatus according to any one of claims 1 to 8.
